# EUROPÄISCHE PATENTANMELDUNG

(11) **EP 3 786 516 A2**
(43) Veröffentlichungstag der Anmeldung: **03.03.2021**
(21) Anmeldenummer: 20193471.8
(22) Anmeldetag: 28.08.2020
(51) Int. Cl.: F17D 5/02, G01M 3/00, F25B 25/00, F25B 49/00

(54) **VERFAHREN ZUR ZEITLICHEN DRUCKANSTIEGSMESSUNG IN EINEM WÄRMEPUMPENGEHÄUSE EINER INNEN AUFGESTELLTEN WÄRMEPUMPENANLAGE UND EINE DRUCKMESSVORRICHTUNG**

(30) Priorität: 28.08.2019 DE 102019123044
(71) Anmelder: Vaillant GmbH, 42859 Remscheid (DE)
(72) Erfinder: Wohlfeil, Arnold, 42799 Leichlingen (DE); Schnabl, Dennis, 42859 Remscheid (DE)
(74) Vertreter: Popp, Carsten

(57) **Zusammenfassung**

Verfahren und Vorrichtung zur Messung des zeitlichen Druckanstiegs innerhalb des Gehäuses einer Wärmepumpe, um bei Überschreitung einer kritischen Druckanstiegsgeschwindigkeit auf eine große Leckage zu schließen.

## Beschreibung

Die Erfindung betrifft das Erkennen irregulärer Zustände in Kältekreisen, in denen ein als Kältemittel wirkendes Arbeitsfluid in einem thermodynamischen Kreisprozess, wie zum Beispiel dem Clausius-Rankine-Kreisprozess, geführt wird. Vorwiegend sind dies innen aufgestellte Wärmepumpen, aber auch Klimaanlagen und Kühlgeräte, wie sie in Wohngebäuden gebräuchlich sind. Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Die zum Einsatz kommenden thermodynamischen Kreisprozesse sind seit langem bekannt, ebenso die Sicherheitsprobleme, die bei der Verwendung geeigneter Arbeitsfluide entstehen können. Abgesehen von Wasser sind die bekanntesten damaligen Arbeitsfluide brennbar und giftig. Sie führten im vergangenen Jahrhundert zur Entwicklung der Sicherheitskältemittel, die aus fluorierten Kohlenwasserstoffen bestanden. Es zeigte sich jedoch, dass diese Sicherheitskältemittel zur Klimaerwärmung führen und dass ihre sicherheitstechnische Unbedenklichkeit zu konstruktiven Unachtsamkeiten führte. Bis zu 70 % des Umsatzes entfiel auf den Nachfüllbedarf undichter Anlagen und deren Leckageverluste, der hingenommen wurde, solange dies im Einzelfall als wirtschaftlich vertretbar empfunden wurde und Bedarf an Ersatzbeschaffung förderte.

Heutige Kältekreise sind ausgestattet mit diesen Sicherheitskältemitteln der Sicherheitsklasse A1, d.h. sie sind nicht giftig und nicht brennbar. Die gebräuchlichsten Kältemittel im Bereich der Wärmepumpenanwendungen sind die Kältemittel R134a, R407C bzw. R410A, allesamt Fluorkohlenwasserstoffverbindungen oder deren Gemische. Der Einsatz dieser Kältemittel war bis Januar 2015 keinerlei Restriktionen unterworfen, die Neufassung der F-Gase-Verordnung (EU) 517/2014 zum 01. Januar 2015 schränkt zukünftig die Anwendung von Fluorkohlenwasserstoff- Kältemitteln über Mengenbegrenzungen in der Europäischen Union derartig ein, dass die Preise bisheriger Kältemittel deutlich ansteigen werden. Ziel der F-Gase-Verordnung ist die mittelfristige Verbannung der treibhausgasfördernden Kältemittel und den Ersatz durch natürliche Kältemittel bzw. gegen chemische Kältemittel mit erheblich reduziertem Treibhauspotenzial. Einschlägig sind auch die Norm EN 378 und ihre Vorgaben zur Aufstellung.

Nachteilig ist jedoch, dass nahezu alle Kältemittelalternativen zur Gruppe der brennbaren oder giftigen Kältemittel gehören, insbesondere die technisch vielversprechendsten Kältemittel wie z.B. R290 (Propan) und R1270 (Propylen). R170 (Ethan), R717 (Ammoniak), R600 (n-Butan), R600a (Isobutan), R723 (Dimethylether/ Ammoniak), R744a (Distickstoffmonoxid) sowie Mischungen aus diesen Kältemitteln und vielen anderen, wie z.B. kritischeren Kältemitteln wie R245fa (1,1,1,3,3 Pentafluorpropan).

Dies führt zu Sicherheitsproblemen bei Leckagen. Leckagen können sehr unterschiedlichen Charakter aufweisen. Undichtigkeiten an Verbindungen führen zu einem schleichenden Verlust von Arbeitsfluid über einen längeren Zeitraum. Sie sind ärgerlich, aber vom Gesichtspunkt der Sicherheit aus gesehen unkritisch. Leckagen an Wärmetauschern können auch zum Eintrag von Arbeitsfluid in einen Heizkreislauf oder einen Warmwasserkreislauf führen. In solchen Fällen ist genügend Zeit vorhanden, um geeignete Reparaturmaßnahmen zu ergreifen.

Seltene Leckagen im Kältekreis aufgrund von Abrissen oder vorzeitiger Materialermüdung können jedoch zur schnellen Freisetzung größerer Mengen an Arbeitsfluid führen, vor allem dann, wenn sie abströmseitig des Verdichters in Form eines erhitzten Gases auftreten, welches unter Druck steht und sich bei der Freisetzung ausdehnt. In solchen Fällen kann kurzfristig und kurzzeitig ein Bereich entstehen, in dem Zündfähigkeit vorhanden ist. Sofortmaßnahmen zur Gefahrenabwehr sind dann sehr wichtig.

Dazu muss aber eine derartige Havarie schnell und sicher identifiziert werden. Je nach Menge des Inventars an Arbeitsfluid im Kältekreis findet der Druck- und Temperaturabfall im Kältekreis nur verzögert statt und es ist nicht möglich, innerhalb der ersten Sekunden einen solchen Havariefall sicher als solchen zu identifizieren, zu orten, die möglichen Folgen korrekt einzuschätzen und die jeweils passenden Maßnahmen automatisch einzuleiten.

Bekannte Maßnahmen zur Detektion sind Gaswarner, die an entsprechend gefährdeten Stellen im Aufstellungsgehäuse platziert sind oder Analysatoren für sich ändernde Apparateschwingungen, die sich im Störfall ändern. Diese Detektionsmittel sind aber langsam, da austretendes Arbeitsfluid zunächst das Gasvolumen aus der Umgebung der Leckagestelle vor sich herschiebt, bevor es in messbarer Konzentration den Gaswarner erreicht. Außerdem ist beim Anschlagen des Gaswarners nicht klar, wieviel Reaktionszeit bleibt und wie stark die Leckage tatsächlich ist. Auch gelegentliche Fehlalarme können auftreten, und außerdem besteht immer die Schwierigkeit, die Einrichtungen regelmäßig hinsichtlich Ihrer Funktion zu testen.

Bei den Mitteln zur Bewältigung eines solchen Havariefalls sind neben der Aktivierung von Schnellschlussventilen, die die maximal austretende Menge des Arbeitsfluids limitieren, die gleichzeitige schnelle Zwangsbelüftung und die Inertisierung mit Inertgasen, wie beispielsweise Stickstoff und Kohlendioxid, einschlägig bekannt. Hierbei handelt es sich aber um sehr massive Eingriffe und es wäre wünschenswert, wenn sie nur bei tatsächlich schweren Leckagen mit großen Verlustraten vorgenommen werden. Fehlalarme oder Fehleinschätzungen, die in automatisierter Weise zu derartigen überschießenden Notmaßnahmen führen könnten, wären nicht akzeptabel.

Die Aufgabe der Erfindung ist daher, ein Leckagedetektionsverfahren und eine Vorrichtung bereitzustellen, die innerhalb sehr kurzer Zeit eine Leckage erkennen kann, welche zu einer schnellen Freisetzung von großen Mengen an Arbeitsfluid führt.

Mit großen Mengen sind dabei Freisetzungen gemeint, die unmittelbar zusammen mit der umgebenden Luft zur Bildung von zündfähigen Gemischen führen. Mit sehr kurzer Zeit sind Zeiträume von wenigen Zehntelsekunden bis zu einigen Sekunden gemeint, die EN 60335-2-40 sieht hier ein zu berücksichtigendes Leck von 25 % ± 5 % des Kältemittelinhalts pro Minute vor, was jedoch nicht bedeutet, dass ein explosives Gemisch erst nach einer Minute zu erwarten wäre, wenn bis dahin ein Viertel des vorhandenen Arbeitsfluids ausgeströmt ist.

Die Erfindung löst diese Aufgabe indem eine Messung des zeitlichen Druckanstiegs innerhalb des Gehäuses vorgenommen wird, und bei Überschreitung einer kritischen Druckanstiegsgeschwindigkeit auf eine große Leckage geschlossen wird.

Die Erfindung löst die Aufgabe durch ein Verfahren zur zeitlichen Druckanstiegsmessung einem Wärmepumpengehäuse einer Wärmepumpenanlage, wobei das Arbeitsfluid in einem geschlossenen, hermetisch dichten Arbeitsfluidumlauf geführt wird, der Arbeitsfluidumlauf mindestens aufweisend
- einen Verdichter für Arbeitsfluid,
- eine Entspannungseinrichtung für Arbeitsfluid,
- zwei Wärmeübertrager für Arbeitsfluid mit jeweils mindestens zwei Anschlüssen für Wärmeüberträgerfluide,
- mindestens ein Arbeitsfluidgehäuse, welches alle am geschlossenen Arbeitsfluidumlauf angeschlossenen Einrichtungen umfasst und weitere Einrichtungen umfassen kann,
- mindestens eine Druckmesseinrichtung,
- wobei der im Gehäuse auftretende Druck mehrmals pro Sekunde gemessen wird und der Quotient aus der Differenz aufeinanderfolgender Messwerte und dem verwendeten Zeitintervall ermittelt wird,
- dieser Quotient als Referenz für einen Leckagefall benutzt wird.

Die zeitliche Ableitung des Druckverlaufs wird praktisch durch ein Differenzenverfahren approximiert. Der Vorteil davon ist, dass es sehr wenig Rechenzeit benötigt und daher sehr schnell ist. Im Grunde kann auch jedes andere Verfahren bzw. Differenzenverfahren zur Ermittlung der ersten zeitlichen Ableitung dienen. Vorzugsweise finden ca. hundert bis zehntausend Druckmessungen pro Sekunde statt.

Anwendbar ist dies für innen aufgestellte Wärmepumpen, außen aufgestellte Wärmepumpen, Split-Wärmepumpen und Luft/Luft-Wärmepumpen ohne Fluidanschluss.

In einer Ausgestaltung des Messverfahrens wird der Differenzdruck zwischen dem Druck innerhalb des Gehäuses und außerhalb des Gehäuses gemessen. Auf diese Weise wird sichergestellt, dass auch ein langsamerer Druckanstieg bemerkt wird und bei Erreichen eines definierten Schwellenwertes ebenfalls zur Einleitung geeigneter Maßnahmen herangezogen werden kann.

Bei hochfrequenter Taktung von Druckmessungen können Druckschwankungen aufgrund des ausgestrahlten Schalls von Lärmquellen innerhalb des Gehäuses ebenfalls zu Messergebnissen für Druckanstiegsgeschwindigkeiten führen, die für sich allein die als kritisch definierten Grenzwerte überschreiten. In einer Ausgestaltung des Messverfahrens wird daher vorgesehen, dass ein Mikrofon neben der Druckmessstelle platziert wird, welches die Schwingungen der Umgebungsgeräusche im Arbeitsfluidgehäuse misst und diese mit den bekannten Methoden des "active noise cancelling" mit den Messwerten der Druckmessstelle verrechnet. Auf diese Weise der Filterung werden Druckanstiege aufgrund von Schallschwingungen von tatsächlichen Druckanstiegen getrennt. Vor allem harmonische Schwingungen lassen sich auf diese Weise wegfiltern. Druckmessaufnehmer und Mikrofon sollten vorzugsweise auf verschiedenen Messprinzipien beruhen, das Mikrofon kann beispielsweise ein Kondensatormikrofon sein.

Druckanstiege breiten sich bekanntlich mit Schallgeschwindigkeit aus, eine Strecke von einem Meter wird innerhalb eines Gehäuses innerhalb von etwa drei Millisekunden zurückgelegt. In einer Ausgestaltung der Erfindung werden mehrere Druckmessstellen im Gehäuse an voneinander entfernten Stellen platziert und der zeitliche Versatz der eintreffenden Druckanstiegssignale wird bestimmt. Aus diesem Laufzeitunterschied wird auf den ungefähren Ort der Leckage geschlossen. Zusammen mit den bekannten Anlagendaten kann damit eine Einschätzung zum Schadensort und zum Ausmaß vorgenommen werden.

Das Leckagedetektionsverfahren erfordert eine leistungsfähige und robuste Druckmessvorrichtung, die gleichzeitig schnell und genau ist, während an die Fähigkeit der Drucküberlastbarkeit und der chemisch-thermischen Beständigkeit nur geringe Anforderungen gestellt werden. Das Messergebnis sollte entweder direkt in Form eines zeitlichen Druckanstiegs oder in Form von Einzelwerten in jeweils elektronischer Form erzeugt werden.

Besonders geeignet sind hierfür piezoelektrische Messaufnehmer, die mit hoher Frequenz abgetastet werden. Piezoelektrische Messaufnehmer sind mit Keramiken, Quarzkristallen und Turmalinen erhältlich, für den hier vorgesehenen Einsatz sind Quarzkristalle ideal. Diese können klein sein und mit Abtastfrequenzen bis über 6 kHz betrieben werden.

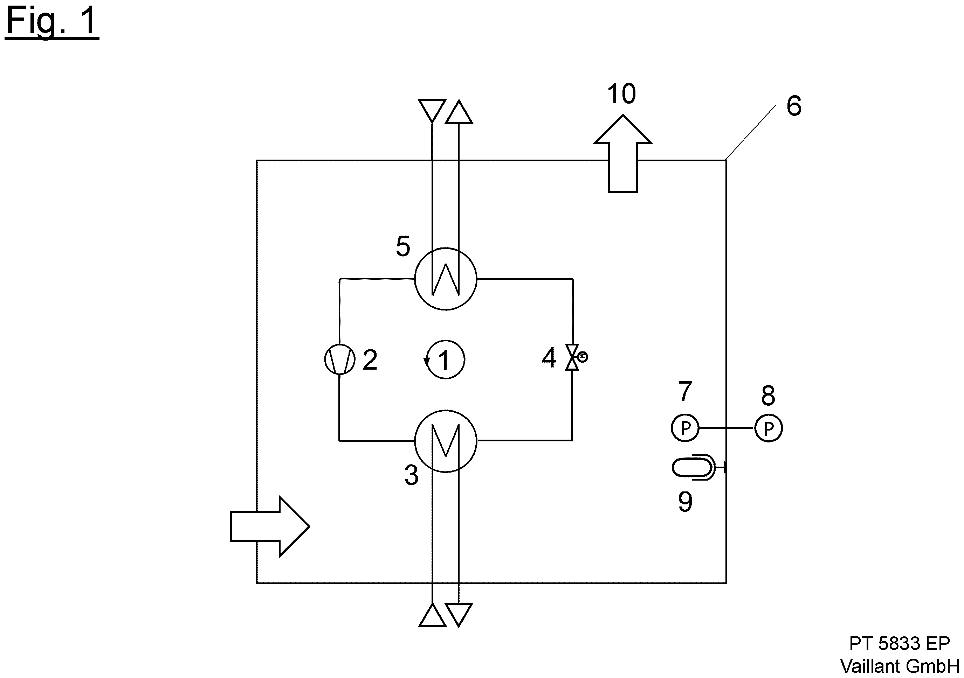

Die Erfindung wird nachfolgend anhand einer Prinzipskizze näher erläutert. Hierbei zeigt Fig. 1 ein vereinfachtes Schema einer Wärmepumpe, die mit einer Druckänderungsmessung ausgestattet ist.

Fig. 1 zeigt eine Wärmepumpe anhand einer Prinzipskizze eines Kältekreises 1 mit einem Verdichter 2, einem Kondensator 3, einer Druckreduzierung 4 und einem Verdampfer 5 in einem Arbeitsfluidgehäuse 6, einem Druckmessaufnehmer 7 einem Mikrofon 9, das in den Innenraum des Arbeitsfluidgehäuses gerichtet ist, einem weiteren Druckmessaufnehmer 8, der in den Außenraum des Arbeitsfluidgehäuses gerichtet ist, und einem Abzug 10.

Der Kältekreis 1 wird in diesem Beispiel mit dem entzündlichen Arbeitsfluid Propan, welches auch unter der Bezeichnung R290 bekannt ist, betrieben. Im Fall eines Leitungsabrisses zwischen Verdichter 2 und Kondensator 3 gelangt unter Druck stehendes Arbeitsfluid sehr schnell in das Arbeitsfluidgehäuse 6, was dazu führt, dass sich darin schnell Druck aufbaut. Zur Darstellung der in Betracht kommenden Größenordnungen sei beispielhaft ein Arbeitsfluidgehäuse mit einem freien Luftvolumen von ca. 100 Litern betrachtet, in welches ca. 1 Liter gasförmiges Propan pro Sekunde austreten. In einem solchen Fall würde der Druckanstieg anfangs ca. 0,01 bar pro Sekunde, d.h. 1000 Pa/s betragen und es würde nicht lange dauern, bis das Gehäuse dem entstehenden Gehäuseinnendruck nicht mehr standhalten würde, angenommen, es wäre hinreichend dicht. Außerdem würde schon nach ca. zwei Sekunden ein zündfähiges Gemisch mit zwei Prozent Propan entstehen.

Nimmt man in einem weiteren Beispiel an, dass eine Leckage einen Durchmesser von 10 Millimetern habe, würde bei den üblichen Druckverhältnissen Arbeitsfluid mit Schallgeschwindigkeit ausströmen und man hätte mit einem Austritt von bis zu 22 Litern pro Sekunde zu rechnen. Der Druckanstieg wäre also noch deutlich höher.

Demgegenüber beträgt der Schalldruck der laufenden Apparate ca. 1 Pa, Bei einer Frequenz von 100 Hz läge der maximale Druckanstieg einer einzelnen Schallwelle bei ca. 628 Pa/s. Würde man die Auslöseschwelle für eine Sofortmaßnahme also oberhalb von 1000 Pa/s festlegen und eine Abtastrate von 1 kHz für die Druckmessung ansetzen, ließe sich bereits nach 2 Tastintervallen nach Differenzenbildung der Rohrleitungsabriss zweifelsfrei erkennen. Das wären nur 2 Millisekunden. Stellt man eine Wegstrecke von 0,3 Metern zwischen Leckage und Drucksensor in Rechnung, käme eine weitere Millisekunde hinzu. Weitere Millisekunden werden für die Auswertung benötigt. Insgesamt kann ca. 10 Millisekunden nach dem Ereignis eine automatische Sicherheitsmaßnahme in die Wege geleitet werden, etwa eine Inertisierung durch ein unter Druck stehendes Inertgas oder durch Öffnen einer Belüftung nach außen oder beidem gleichzeitig. Ein üblicher Gaswarner hätte hier noch überhaupt keinen Alarm ausgelöst.

Ist die leckagebedingte Ausströmrate gegenüber dem vorangegangenen Beispiel um den Faktor 10 geringer, würde zwar erst nach 20 Sekunden ein zündfähiges Gemisch entstehen und der maximal zulässige Behälterinnendruck würde auch später erreicht, die Druckanstiegsgeschwindigkeit kommt aber den geräuschbedingten einzelnen Schallwellen nahe. Diese müssen also eliminiert werden, was entweder durch eine vergrößerte Anzahl von Stützpunkten bei der Differenzenbildung der Druckmesswerte oder durch eine Filterung von Geräuschen durch "active noise cancelling" unter Zuhilfenahme des Mikrofons 9 aufgefangen wird. Eine automatische Reaktion kann dann innerhalb einer Sekunde erfolgen.

Ist die leckagebedingte Ausströmrate um einen weiteren Faktor 10 geringer, kann stattdessen die Druckanstiegsgeschwindigkeit gegenüber dem Außendruck herangezogen werden. Die automatischen Maßnahmen bewirken dann vor allem, dass der Behälter nicht zerstört wird. Dies gilt vor allem dann, wenn zur Verhinderung eines zündfähigen Gemischs eine Inertisierung mit unter Druck befindlichem Inertgas vorgenommen wird. Eine automatische Reaktion kann dann innerhalb einer Minute vorgenommen werden.

Mit einem solcherart verwendeten Druckanstiegssensor kann somit schnell und trotzdem abgestuft auf größere, seltene Leckageereignisse angemessen automatisch reagiert werden, noch bevor ein manueller Eingriff möglich ist, auch ist es möglich, Fehlalarme sicher zu vermeiden. Es versteht sich hierbei von selbst, dass eine leistungsfähige Regelungstechnik vorgesehen werden muss. Diese kann entweder computergestützt oder analog erfolgen, letzteres hat den Vorteil, dass Funktionstests besser und leichter durchführbar sind.

### Bezugszeichenliste

- 1: Kältekreis
- 2: Verdichter
- 3: Kondensator
- 4: Druckreduzierung
- 5: Verdampfer
- 6: Arbeitsfluidgehäuse
- 7: Druckmesssensor innen
- 8: Druckmesssensor außen
- 9: Mikrofon
- 10: Luftauslass

## Patentansprüche

1. Verfahren zur zeitlichen Druckanstiegsmessung einem Wärmepumpengehäuse einer innen aufgestellten Wärmepumpenanlage, wobei das Arbeitsfluid in einem geschlossenen, hermetisch dichten Arbeitsfluidumlauf geführt wird, der Arbeitsfluidumlauf mindestens aufweisend
- einen Verdichter (2) für Arbeitsfluid,
- eine Entspannungseinrichtung (4) für Arbeitsfluid,
- zwei Wärmeübertrager (3, 5) für Arbeitsfluid mit jeweils mindestens zwei Anschlüssen für Wärmeüberträgerfluide,
- ein Arbeitsfluidgehäuse (6), welches alle am geschlossenen Arbeitsfluidumlauf angeschlossenen Einrichtungen umfasst und weitere Einrichtungen umfassen kann,
- mindestens eine Druckmesseinrichtung, (7),
**dadurch gekennzeichnet, dass**
- der im Arbeitsfluidgehäuse (6) auftretende Druck mehrmals pro Sekunde gemessen wird und der Quotient aus der Differenz aufeinanderfolgender Messwerte und dem verwendeten Zeitintervall ermittelt wird,
- dieser Quotient als zeitliche Druckänderungsgeschwindigkeit erfasst und als Referenz für einen Leckagefall benutzt wird.

2. Verfahren nach Anspruch 1, **dadurch gekennzeichnet, dass** die ermittelten Quotienten aus den Differenzen aufeinanderfolgender Messwerte und den verwendeten Zeitintervallen in einem Differenzenverfahren als Verlauf der zeitlichen Druckänderungsgeschwindgkeit verwertet werden, um als Referenz für einen Leckagefall zu dienen.

3. Verfahren nach einem der Ansprüche 1 oder 2, **dadurch gekennzeichnet, dass** die Abtastfrequenz der Druckmesswerte zwischen 100 Hertz und 10 Kilohertz gewählt wird.

4. Verfahren nach einem der Ansprüche 1 bis 3, **dadurch gekennzeichnet, dass** der Differenzdruck zwischen dem Druck innerhalb des Arbeitsfluidgehäuses (6) und außerhalb des Arbeitsfluidgehäuses gemessen und als Referenz für einen Leckagefall genutzt wird.

5. Verfahren nach einem der Ansprüche 1 bis 4, **dadurch gekennzeichnet, dass** mittels eines Mikrofons neben der Druckmessstelle, welche den Druck im Arbeitsfluidgehäuse (6) misst, die Schwingungen der Umgebungsgeräusche im Arbeitsfluidgehäuse (6) gemessen, diese mit den bekannten Methoden des "active noise cancelling" mit den Messwerten der Druckmessstelle (7) verrechnet werden, und das sich daraus ergebende . Druckänderungsgeschwindgkeitsergebnis als Referenz für einen Leckagefall benutzt wird.

6. Verfahren nach einem der Ansprüche 1 bis 5, **dadurch gekennzeichnet, dass** mehrere Druckmessstellen (7) an entfernten Orten im Arbeitsfluidgehäuse (6) benutzt werden, um mittels Laufzeitverzögerung des Druckanstiegssignals den Ort der Leckage zu bestimmen.

7. Druckmessvorrichtung, **dadurch gekennzeichnet, dass** ein piezoelektrischer Messaufnehmer mit einer hohen Abtastfrequenz genutzt wird.

8. Druckmessvorrichtung nach Anspruch 7, **dadurch gekennzeichnet, dass** als Material ein Quarzkristall verwendet wird.

9. Druckmessvorrichtung nach einem der Ansprüche 7 oder 8, **dadurch gekennzeichnet, dass** direkt am Drucksensor der Druckmessvorrichtung eine Rechenvorrichtung zur Differenzenbildung der erhaltenen Spannungswerte des Drucksensors angeordnet ist und diese Spannungsdifferenz zweier aufeinander folgender Spannungswerte als Signal ausgegeben wird.

10. Druckmessvorrichtung nach einem der Ansprüche 7 bis 9, **dadurch gekennzeichnet, dass** direkt am Drucksensor der Druckmessvorrichtung eine Rechenvorrichtung zur Differenzenbildung der erhaltenen Spannungswerte des Drucksensors angeordnet ist und diese Spannungsdifferenz zweier aufeinander folgender Spannungswerte einen Schaltimpuls auslöst oder ein Stromsignal als Signal ausgibt.
